# DEMANDE DE BREVET EUROPEEN

(11) **EP 2 597 572 A1**
(43) Date de publication de la demande: **29.05.2013**
(21) Numéro de dépôt: 12192795.8
(22) Date de dépôt: 15.11.2012
(51) Int. Cl.: G06F 11/07

(54) **Système de gestion de buffers d'évènements horodatés**

(30) Priorité: 28.11.2011 FR 1160845
(71) Demandeur: Schneider Electric Industries SAS, 92500 Rueil-Malmaison (FR)
(72) Inventeur: Eyraud, Annick, 06600 Antibes (FR); Wilhelm, Philippe, 06410 Biot (FR); Piacibello, Jacques, 06600 Antibes (FR)

(57) **Abrégé**

La présente invention concerne un système de gestion d'événements horodatés avec signalisation de séquence d'événements incertaine, comprenant :
- une liste de variables dont un changement de valeur doit entraîner la détection d'un événement à horodater et à enregistrer ;
- des moyens de positionnement pour chaque variable d'une balise indiquant la qualité de l'horodatage dudit événement ;
- un buffer pour le stockage, avant leur lecture par un logiciel client, desdits événements à horodater et à enregistrer, associés respectivement à un temps d'horodatage, lesdits événements horodatés lus par le logiciel client étant effacés du buffer ;
- des moyens d'activation et de désactivation de moyens d'enregistrement dans un historique des valeurs des variables correspondant auxdits événements horodatés lus.

Le système selon l'invention comprend par ailleurs un événement spécifique de signalisation d'une séquence d'événements incertaine valant 0 lorsque le système doit considérer la séquence des événements suivants dans le buffer comme valide, et valant 1 lorsque le système doit considérer la séquence des événements suivants dans le buffer comme invalide.

## Description

### Domaine technique de l'invention

La présente invention se rapporte à des systèmes présentant des dispositifs d'enregistrement d'événements horodatés et, plus précisément, concerne la gestion d'un tel système présentant un ensemble de sources de détection et d'horodatage d'événements ayant chacune un buffer pour l'enregistrement avant lecture desdits événements horodatés. Chaque buffer est destiné à être lu par un logiciel client distant qui peut ensuite, par exemple, afficher les événements sur un écran d'alarmes ou d'événements. L'une des applications possibles de la présente invention concerne l'analyse de l'origine d'un problème dans un système distribué.

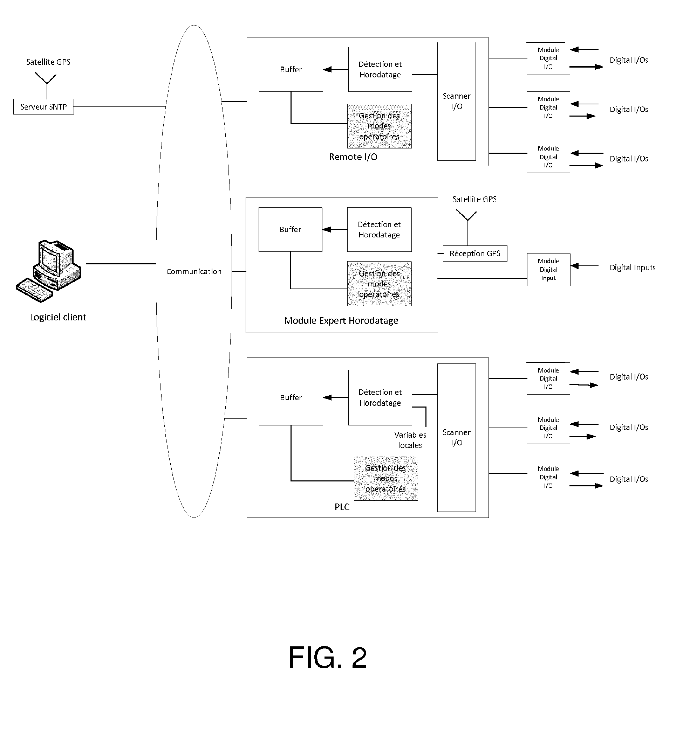

Un exemple de système présentant un ensemble de sources d'événements à horodater est présenté à la figure 2.

Le système selon l'invention rend possible le triage chronologique des événements horodatés. Il assure également que les valeurs des variables de chaque source sont consistantes avec celles vues par le logiciel client et cela même dans des situations particulières, par exemple en cas de buffer plein, ou d'initialisation de l'une des sources ou du logiciel client. Cette fonction de garantie de consistance de valeurs est réalisée de manière autonome par ledit système, sans intervention d'un logiciel centralisé intelligent.

Le système selon l'invention apporte aussi des moyens de diagnostic à destination de l'utilisateur. Il permet de signaler des séquences d'événements incertaines. Une séquence d'événements incertaine, contrairement à une séquence d'événements fiable, est une séquence horodatée de façon incertaine ou pendant lesquelles des événements ont pu être perdus. Il peut aussi permettre la détection d'un horodatage invalide, par exemple du fait d'une horloge invalide ou non synchronisée.

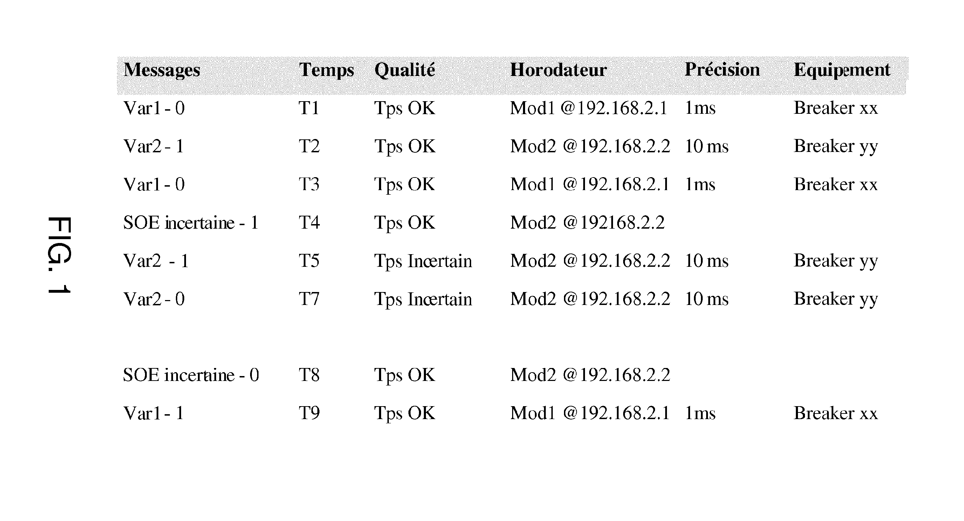

La figure 1 donne un exemple d'informations pouvant être communiquées à l'utilisateur grâce au système selon l'invention.

### Etat de la technique

Selon l'état de la technique, les systèmes présentant des dispositifs d'enregistrement d'événements horodatés sont gérés par un superviseur logiciel dont une des fonctions consiste à collecter les événements survenus au sein des différents sous-systèmes hardwares ou logiciels qui le composent. Ces événements correspondent à la détection d'un changement de valeur de variables appartenant à une liste préconfigurée ; ils doivent être horodatés précisément et triés dans l'ordre chronologique.

Dans l'état de la technique, le logiciel de supervision chargé de collecter et de trier l'ensemble des événements survenus dans le système est donc en permanence connecté au système et interroge en continu ou à intervalle régulier chaque buffer de chaque sous-ensemble, buffers dans lesquels sont temporairement stockés les événements détectés et horodatés localement, au niveau de chaque sous-ensemble.

Le document US20110066598A1 décrit un exemple d'architecture de système présentant des dispositifs d'enregistrement d'événements horodatés. L'enseignement de ce document ne permet pas de gérer de manière autonome, par des moyens intrinsèques, l'ensemble des événements détectés et horodatés dans l'ensemble du système, notamment dans des sous-systèmes distincts, ni de les stocker dans un ordre chronologique croissant. Lorsqu'un mode de fonctionnement non nominal se produit - réinitialisation, buffer plein ...etc. -, le système selon le document US20110066598A1 ne dispose pas de moyens intrinsèques pour gérer ce fonctionnement non nominal. Dans ce brevet, le tri des événements est réalisé par le logiciel client et non par le système de manière autonome.

De même, le procédé décrit dans le document FR2882834A1 ne comprend pas de moyens intrinsèques pour gérer des modes de fonctionnement non nominaux.

La présente invention vise à pallier ce problème. Ainsi, le système selon l'invention fournit un système distribué comprenant des moyens de détection, d'horodatage et d'enregistrement d'événements, ainsi que des moyens intrinsèques et autonomes de gestion de cet horodatage distribué : ces moyens intrinsèques garantissent le triage chronologique des événements détectés et permettent de gérer les modes de fonctionnement non nominaux, comme lors d'une réinitialisation ou lors du remplissage complet d'un buffer.

### Exposé de l'invention

A cet effet, l'invention a pour objet un système de gestion d'événements horodatés avec signalisation de séquence d'événements incertaine, comprenant :
- une liste de variables dont un changement de valeur doit entraîner la détection d'un événement à horodater et à enregistrer ;
- des moyens de détection et d'horodatage desdits événements correspondant à ladite liste de variables ;
- des moyens de positionnement pour chaque variable d'une balise indiquant la qualité de l'horodatage dudit événement ;
- un buffer pour le stockage, avant leur lecture par un logiciel client, desdits événements à horodater et à enregistrer, associés respectivement à un temps d'horodatage, lesdits événements horodatés lus par le logiciel client étant effacés du buffer ;
- des moyens d'activation et de désactivation de moyens d'enregistrement dans un historique des valeurs des variables correspondant auxdits événements horodatés lus ;
- des moyens de détection d'un taux de remplissage dudit buffer dépassant un seuil de remplissage prédéfini ;
- des moyens de détection de la présence d'un logiciel client connecté au buffer pour lire les événements présents dans ledit buffer.

Le système selon l'invention comprend par ailleurs :
- un événement spécifique de signalisation d'une séquence d'événements incertaine valant 0 lorsque le système doit considérer la séquence des événements suivants dans le buffer comme valide, et valant 1 lorsque le système doit considérer la séquence des événements suivants dans le buffer comme invalide ;
- des moyens de passage à la valeur 1 dudit événement spécifique de signalisation d'une séquence d'événements incertaine ;
- des moyens de passage à la valeur 0 dudit événement spécifique de signalisation d'une séquence d'événements incertaine ;
et par ailleurs, si l'événement spécifique de signalisation d'une séquence d'événements incertaine vaut 1, la balise indiquant la qualité de l'horodatage est positionnée à la valeur incertaine.

Avantageusement, ledit système met en oeuvre les moyens de passage à la valeur 1 dudit événement spécifique de signalisation d'une séquence d'événements incertaine lorsque le taux de remplissage du buffer devient supérieur ou égal au seuil de remplissage prédéfini.

Avantageusement, ledit système ne réalise pas d'horodatage d'événement tant qu'il ne détecte aucun logiciel client connecté au buffer pour lire les événements présents dans ledit buffer.

Avantageusement, le système selon l'invention peut mettre en oeuvre les moyens de passage à la valeur 0 dudit événement spécifique de signalisation d'une séquence d'événements incertaine lorsqu'un logiciel client est connecté au buffer pour lire les événements présents dans ledit buffer et que le taux de remplissage du buffer devient inférieur au seuil de remplissage prédéfini ; par ailleurs, si ledit événement spécifique de signalisation d'une séquence d'événements incertaine vaut 0 :
- le système met en oeuvre les moyens d'activation des moyens d'enregistrement dans l'historique des valeurs des variables correspondant aux événements horodatés lus ;
- le système met en oeuvre des moyens d'activation des moyens de détection et d'horodatage des événements correspondant à la liste de variables ;
- le système associe chaque nouvel enregistrement d'événement horodaté dans l'historique à une balise indiquant que l'horodatage dudit événement horodaté est certain.

Avantageusement, si ledit événement spécifique de signalisation d'une séquence d'événements incertaine vaut 0, ledit nouvel enregistrement d'événement horodaté n'est effectué que si la valeur de la variable correspondante a changé par rapport à la dernière valeur de la même variable présente dans l'historique.

Avantageusement, si l'événement spécifique de signalisation d'une séquence d'événements incertaine vaut 1 :
- le système met en oeuvre des moyens de désactivation des moyens de détection d'événements correspondant à la liste de variables.
- le système met en oeuvre les moyens de désactivation des moyens d'enregistrement dans l'historique des valeurs des variables correspondant aux événements horodatés.

Avantageusement, si l'événement spécifique de signalisation d'une séquence d'événements incertaine vaut 1, et si un événement présent dans le buffer est lu par le logiciel client et correspond à une variable dont la valeur a changé par rapport à la dernière valeur de la même variable présente dans l'historique, ledit événement horodaté est enregistré dans l'historique, associé à une balise indiquant que l'horodatage dudit événement horodaté est incertain.

Avantageusement, ledit buffer est l'unique buffer présent dans ledit système de sorte que les événements horodatés qui y sont stockés sont intrinsèquement triés dans un ordre chronologique d'enregistrement croissant.

Avantageusement, dans un système selon l'invention comprenant une pluralité de sources d'événements, chacune desdites sources d'événements présente un unique buffer.

### Brève description des figures

D'autres caractéristiques et avantages vont apparaître dans la description détaillée qui suit faite en regard des dessins annexés qui représentent :
- la figure 1 : un exemple de tableau d'informations pouvant être fourni à l'utilisateur du système selon l'invention ;
- la figure 2 : un exemple de système présentant un ensemble de sources d'événements à horodater ;
- la figure 3 : un diagramme d'état représentant le fonctionnement global du système selon l'invention ;
- la figure 4 : un diagramme représentant le fonctionnement du système selon l'invention, en mode de fonctionnement non nominal pour cause d'initialisation du système ;
- la figure 5 : un diagramme représentant le fonctionnement du système selon l'invention, en mode "Horodatage standard" d'événements ;
- la figure 6 : un diagramme représentant le fonctionnement du système selon l'invention, en mode de fonctionnement non nominal pour cause de buffer plein.

### Description détaillée d'au moins un mode de réalisation

La figure 1 présente un tableau reproduisant un exemple de messages d'événements horodatés communiqués à l'utilisateur grâce au système selon l'invention. La première colonne du tableau liste le contenu de messages d'événements horodatés successifs stockés par le logiciel client dans un historique ; la deuxième colonne concerne le temps d'horodatage associé à chaque message d'événement horodaté ; la troisième colonne donne une indication de la qualité de l'horodatage ; la quatrième colonne donne l'identification topologique du dispositif d'horodatage responsable de l'horodatage pour chacun des messages ; enfin, la cinquième colonne indique la précision de l'horodatage et la sixième colonne liste les équipements à la source de chacun des événements. De toute évidence, ce tableau et l'intitulé des colonnes qui le constituent sont donnés à titre purement illustratif et non limitatif. Dans l'exemple représenté en figure 1, la balise indiquant la qualité de l'horodatage peut prendre la valeur OK ou la valeur incertaine.

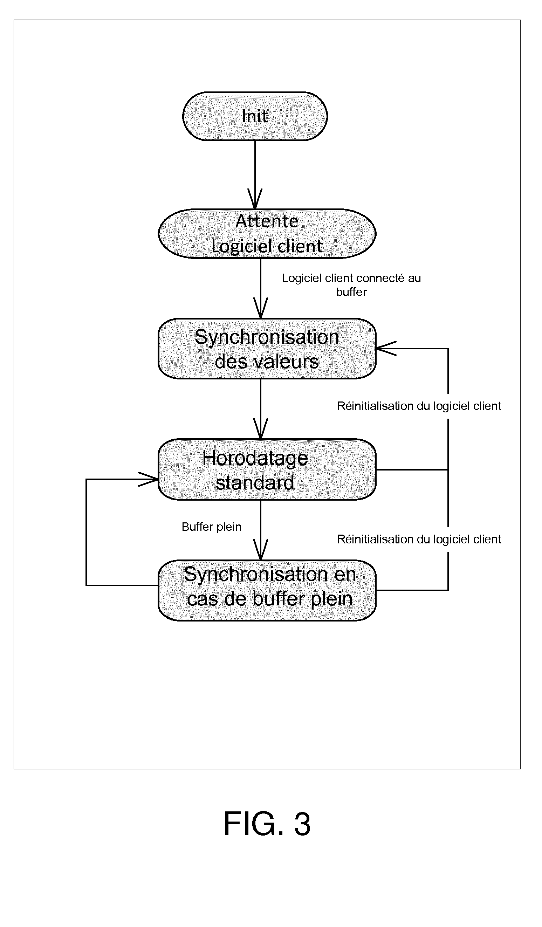

Dans la suite de la description, et en particulier au regard des figures 3 à 6, on explicitera les moyens du système permettant d'obtenir les données pour produire un tel tableau.

La figure 2 représente un schéma d'un exemple de système distribué d'horodatage d'événements concerné par la présente invention. L'utilisateur exploitant les possibilités du système selon l'invention dispose d'un "logiciel client" connecté via un réseau de "Communication" à un système distribué de sources d'événements horodatés. Le module "Remote I/O", le "Module Expert Horodatage" et le "PLC", pour Programmable Logical Controller selon l'acronyme anglais, sont autant de dispositifs d'horodatage. Chacun de ces modules comprend des moyens "Détection et Horodatage" pour détecter et dater tout événement survenant dans les entrées / sorties (I/Os) associées auxdits modules. Chaque événement détecté et horodaté est ensuite enregistré dans un "Buffer" unique par un dispositif d'horodatage, dans chaque source d'événements à horodater, c'est-à-dire dans chaque module. Selon leur type, comme représenté à la figure 2, ces modules peuvent comprendre un "Scanner I/O" relié à différents modules digitaux d'entrées / sorties - "Module Digital I/O" sur la figure 2 - par lesquels transitent des entrées / sorties numériques du système - "Digital I/Os" sur la figure 2 - ou être reliés directement à un module digital d'entrées - "Module Digital Input" sur la figure 2 - par lequel transitent des entrées digitales du système - "Digital Inputs" sur la figure 2-.

Sur la figure 2, un temps de référence est donné par le système de navigation par satellite GPS, pour Global Positioning System selon l'acronyme anglais ; ce temps GPS peut être fourni aux différents dispositifs d'horodatage via un "Serveur SNTP" et le réseau de "Communication" ou, plus directement, via un module de "Réception GPS".

Les figures 3 à 6 présentent de manière détaillée le principe de l'invention.

La figure 3 présente une machine d'état globale représentant le fonctionnement du système selon l'invention.

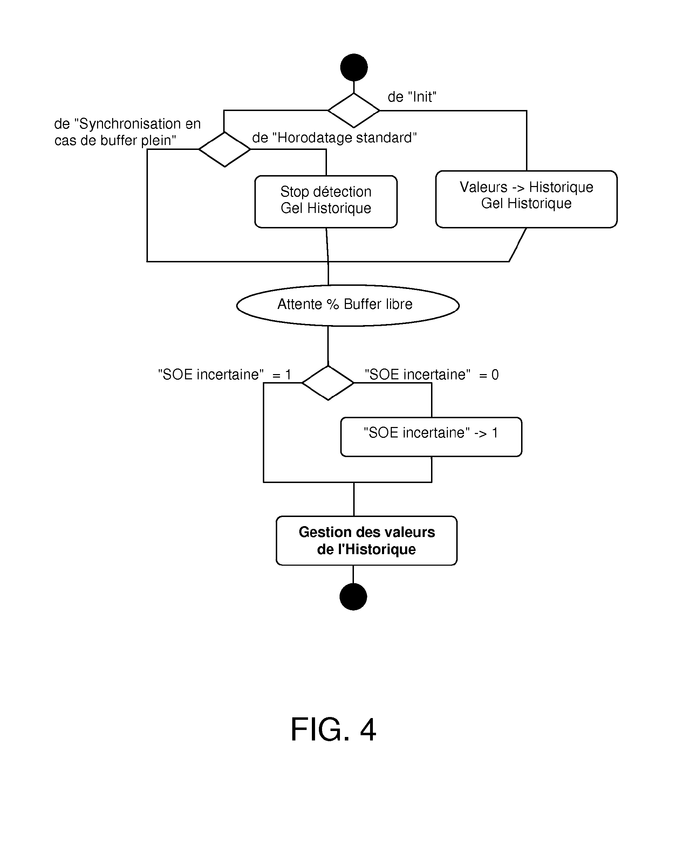

Après une phase d'initialisation "Init", le système attend qu'un "logiciel client" se connecte au(x) buffer(s) du système pour lire les événements horodatés qui s'y trouvent ou s'y trouveront ; lorsqu'un "logiciel client" est apte à lire le buffer, une fonction de "Synchronisation des valeurs" des variables d'une liste de variables préconfigurée - déjà évoquée précédemment - est mise en oeuvre. Cette fonction de "Synchronisation des valeurs" est explicitée à la figure 4.

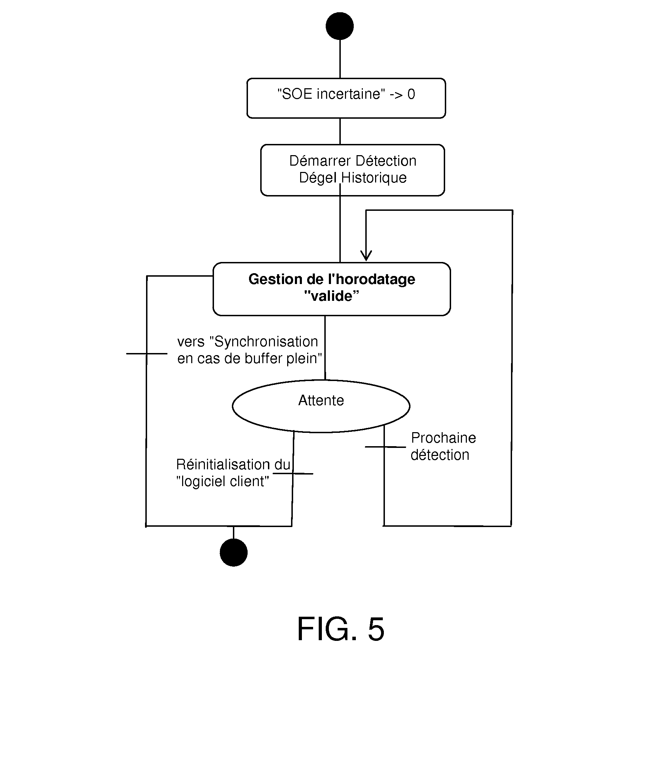

Après mise en oeuvre complète de ladite fonction de "Synchronisation des valeurs", l' "Horodatage standard" s'effectue de manière nominale, tant qu'un mode de fonctionnement non nominal ne survient pas. L' "Horodatage standard" d'événements est explicité à la figure 5.

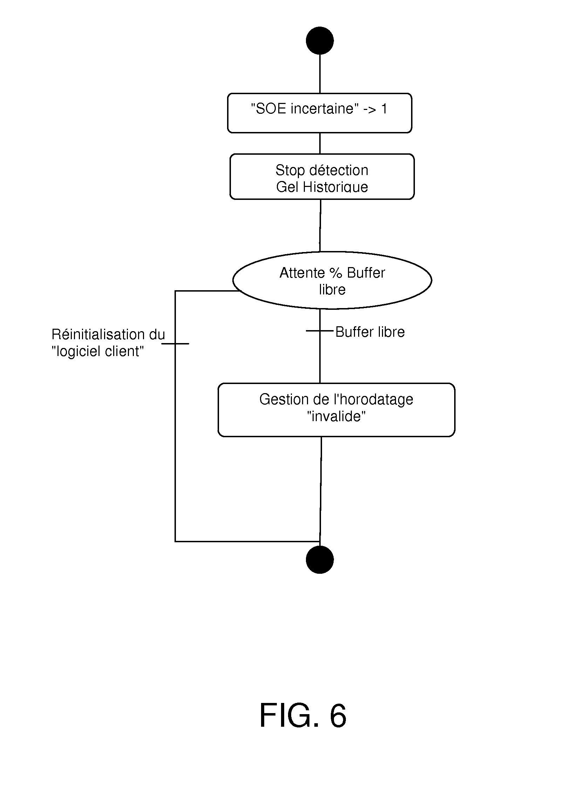

En cas de détection d'un mode de fonctionnement non nominal, en particulier dû à un taux de remplissage du buffer trop important, c'est-à-dire dépassant un seuil de remplissage prédéfini choisi par l'utilisateur, ou à une réinitialisation du "logiciel client", le système suspend l'horodatage standard d'événements ; en cas de buffer plein, le système met en oeuvre la fonction "Synchronisation en cas de buffer plein" explicitée à la figure 6. En cas de réinitialisation du "logiciel client" connecté au buffer, le système revient à la mise en oeuvre de la fonction "Synchronisation des valeurs".

La figure 4 représente une machine d'état explicitant la fonction "Synchronisation des valeurs". Son but est de fournir les valeurs des variables préconfigurées au logiciel client.

On rappelle ici que l'on entend par "historique" la liste des valeurs des variables de la liste préconfigurée enregistrées au cycle de détection précédent.

La fonction "Synchronisation des valeurs" peut être mise en oeuvre :
- après la phase "Init" d'initialisation du système et la connexion d'un "logiciel client" au buffer du système ;
- après réinitialisation du "logiciel client", alors que la fonction d' "Horodatage standard" ou alors que la fonction "Synchronisation en cas de buffer plein" était en oeuvre.

L'une des caractéristiques innovantes de l'invention réside dans le fait que le système considéré comprend un événement spécifique de signalisation d'une séquence d'événements incertaine. Cet événement est désigné sous l'appellation "SOE incertaine" sur les figures 1, 4, 5, 6. Cet événement spécifique permet de signaler à l'utilisateur du système le début et la fin d'une séquence d'événements incertaine. Par exemple, cet événement spécifique de signalisation d'une séquence d'événements incertaine peut être un booléen valant 1 lorsque l'horodatage est incertain, et 0 lorsque l'horodatage peut être considéré comme certain.

Selon le mode de réalisation de l'invention présenté à la figure 4, lorsque la fonction "Synchronisation des valeurs" est mise en oeuvre après la phase d'initialisation, les valeurs des variables correspondant à des événements présents dans le buffer sont enregistrées dans l' "Historique" par des moyens adaptés. Puis, l' "Historique" est gelé.

Si la fonction "Synchronisation des valeurs" est mise en oeuvre après la réinitialisation du "logiciel client", en provenance de la fonction "Synchronisation en cas de buffer plein", ou de la fonction "Horodatage standard", le système stoppe la détection d'événements, c'est-à-dire la détection de changements de valeur de variables de la liste de variables considérée, et gèle l' "Historique" par des moyens adaptés.

Puis le système attend que le buffer soit partiellement libre, car lu par le logiciel client, afin d'avoir la place nécessaire pour stocker les valeurs.

Ensuite, le système signale que la séquence d'événements qui va suivre est incertaine car elle sera constituée de valeurs et non pas de changements de valeurs. Pour cela, elle positionne l'événement spécifique "SOE incertaine" à 1 s'il n'était pas déjà positionné à cette valeur. L'ensemble des valeurs des variables enregistrées dans l'historique sont stockées dans le buffer, associées pour chaque variable à une balise indiquant que l'horodatage des événements correspondants doit être considéré comme incertain.

Le système met alors en oeuvre la fonction "Horodatage standard" décrite à la figure 5. L' "Horodatage standard" est également mis en oeuvre après avoir complètement exécuté la fonction "Synchronisation en cas de buffer plein" décrite à la figure 6.

La fonction "Horodatage standard" commence par signaler que la séquence d'événements qui va suivre est maintenant fiable car elle va être constituée de véritables changements de valeurs. Pour cela elle positionne l'événement « SOE incertaine » à la valeur 0. Ensuite, la fonction de détection d'événements va démarrer et en conséquence, l' "Historique" est dégelé.

Ensuite, et cela correspond à une fonction de "Gestion de l'horodatage "valide"", pour chaque variable de la liste de variables préconfigurée :
- si le buffer est plein, le système exécute la fonction "Synchronisation en cas de buffer plein" ;
- si une réinitialisation du "logiciel client" est détectée, le système exécute la fonction "Synchronisation des valeurs" ;
- sinon, lorsqu'un événement est détecté, traduisant un changement de valeur d'une variable de la liste de variables préconfigurée, la nouvelle valeur de ladite variable est stockée dans le buffer, associée à une balise indiquant que l'horodatage de l'événement correspondant doit être considéré comme certain.

La figure 6 décrit la fonction "Synchronisation en cas de buffer plein". Le système exécute cette fonction en provenance de la fonction d' "Horodatage standard", lorsque le buffer est rempli. Son but est de fournir au logiciel client les transitions de valeurs des variables entre le moment où le buffer est plein et le moment où il est devenu partiellement libre avec suffisamment de place pour stocker de nouvelles valeurs. Cette opération est nécessaire car pendant que le buffer est plein, les valeurs continuent d'évoluer mais les événements ne peuvent plus être stockés dans le buffer et ne seront donc pas reçus par le logiciel client. Il n'y a alors plus de consistance entre les valeurs côté source d'événements horodatés et les valeurs côté logiciel client.

Le système signale que la séquence d'événements qui va suivre est incertaine car elle sera constituée de transitions particulières et pas de changements de valeurs standards. Il positionne l'événement "SOE incertaine" à la valeur 1.

Par ailleurs, la détection d'événements est stoppée, l' "Historique" est gelé et le système attend que le buffer soit partiellement libre, car lu par le logiciel client, afin d'avoir la place nécessaire pour stocker les transitions particulières.

Lorsque le buffer présente de nouveau de l'espace libre, le système vérifie pour chaque variable de la liste de variables préconfigurée si sa valeur a changé par rapport à la dernière valeur stockée dans l'historique quand le buffer est devenu plein. Si c'est le cas, la nouvelle valeur de chaque variable modifiée est enregistrée dans le buffer, associée à une balise indiquant que l'horodatage des événements correspondants doit être considéré comme incertain ; cela correspond à une fonction de "Gestion de l'horodatage "invalide"".

Enfin, en cas de détection d'une réinitialisation du "logiciel client", le système met en oeuvre la fonction "Synchronisation des valeurs" décrite à la figure 4.

En résumé, le système selon l'invention présente l'avantage de disposer des moyens pour assurer la consistance des valeurs et la chronologie des événements de manière intrinsèque même en cas de fonctionnements non nominaux, par exemple en cas de buffer plein ou de réinitialisation du logiciel client chargé de lire le buffer ou de réinitialisation de la source d' événements horodatés.

Grâce à la signalisation d'une séquence d'événements incertaine, le système selon l'invention permet d'informer l'utilisateur dès lors que l'horodatage d'événements doit être considéré comme incertain car peu précis ou que certains événements de la séquence sont susceptibles d'avoir été perdus.

Chaque source d'événements selon l'invention comprend un unique buffer qu'elle est capable de gérer par des moyens intrinsèques ; la présence d'un unique buffer rend automatique le classement chronologique dans ledit buffer unique des événements détectés.

## Revendications

1. Système de gestion d'événements horodatés avec signalisation de séquence d'événements incertaine, comprenant :
- une liste de variables dont un changement de valeur doit entraîner la détection d'un événement à horodater et à enregistrer ;
- des moyens de détection et d'horodatage desdits événements correspondant à ladite liste de variables ;
- des moyens de positionnement pour chaque variable d'une balise indiquant la qualité de l'horodatage dudit événement ;
- un buffer pour le stockage, avant leur lecture par un logiciel client, desdits événements à horodater et à enregistrer, associés respectivement à un temps d'horodatage, lesdits événements horodatés lus par le logiciel client étant effacés du buffer ;
- des moyens d'activation et de désactivation de moyens d'enregistrement dans un historique des valeurs des variables correspondant auxdits événements horodatés lus ;
- des moyens de détection d'un taux de remplissage dudit buffer dépassant un seuil de remplissage prédéfini ;
- des moyens de détection de la présence d'un logiciel client connecté au buffer pour lire les événements présents dans ledit buffer ;
**caractérisé en ce qu'il** comprend par ailleurs :
- un événement spécifique de signalisation d'une séquence d'événements incertaine valant 0 lorsque le système doit considérer la séquence des événements suivants dans le buffer comme valide, et valant 1 lorsque le système doit considérer la séquence des événements suivants dans le buffer comme invalide ;
- des moyens de passage à la valeur 1 dudit événement spécifique de signalisation d'une séquence d'événements incertaine ;
- des moyens de passage à la valeur 0 dudit événement spécifique de signalisation d'une séquence d'événements incertaine ;
et **en ce que** :
- si l'événement spécifique de signalisation d'une séquence d'événements incertaine vaut 1, la balise indiquant la qualité de l'horodatage est positionnée à la valeur incertaine.

2. Système selon la revendication 1, **caractérisé en ce que** ledit système met en oeuvre les moyens de passage à la valeur 1 dudit événement spécifique de signalisation d'une séquence d'événements incertaine lorsque le taux de remplissage du buffer devient supérieur ou égal au seuil de remplissage prédéfini.

3. Système selon l'une des revendications 1 à 2, **caractérisé en ce que** ledit système ne réalise pas d'horodatage d'événement tant qu'il ne détecte aucun logiciel client connecté au buffer pour lire les événements présents dans ledit buffer.

4. Système selon l'une des revendications 1 à 3, **caractérisé en ce qu'il** met en oeuvre les moyens de passage à la valeur 0 dudit événement spécifique de signalisation d'une séquence d'événements incertaine lorsqu'un logiciel client est connecté au buffer pour lire les événements présents dans ledit buffer et que le taux de remplissage du buffer devient inférieur au seuil de remplissage prédéfini ;
et **en ce que**, si ledit événement spécifique de signalisation d'une séquence d'événements incertaine vaut 0 :
- le système met en oeuvre les moyens d'activation des moyens d'enregistrement dans l'historique des valeurs des variables correspondant aux événements horodatés lus ;
- le système met en oeuvre des moyens d'activation des moyens de détection et d'horodatage des événements correspondant à la liste de variables ;
- le système associe chaque nouvel enregistrement d'événement horodaté dans l'historique à une balise indiquant que l'horodatage dudit événement horodaté est certain.

5. Système selon la revendication 4, **caractérisé en ce que**, si ledit événement spécifique de signalisation d'une séquence d'événements incertaine vaut 0, ledit nouvel enregistrement d'événement horodaté n'est effectué que si la valeur de la variable correspondante a changé par rapport à la dernière valeur de la même variable présente dans l'historique.

6. Système selon l'une des revendications 1 à 5, **caractérisé en ce que**, si l'événement spécifique de signalisation d'une séquence d'événements incertaine vaut 1 :
- le système met en oeuvre des moyens de désactivation des moyens de détection d'événements correspondant à la liste de variables ;
- le système met en oeuvre les moyens de désactivation des moyens d'enregistrement dans l'historique des valeurs des variables correspondant aux événements horodatés.

7. Système selon la revendication 6, **caractérisé en ce que**, si l'événement spécifique de signalisation d'une séquence d'événements incertaine vaut 1, et si un événement présent dans le buffer est lu par le logiciel client et correspond à une variable dont la valeur a changé par rapport à la dernière valeur de la même variable présente dans l'historique, ledit événement horodaté est enregistré dans l'historique, associé à une balise indiquant que l'horodatage dudit événement horodaté est incertain.

8. Système selon l'une des revendications précédentes, **caractérisé en ce que** ledit buffer est l'unique buffer présent dans ledit système de sorte que les événements horodatés qui y sont stockés sont intrinsèquement triés dans un ordre chronologique d'enregistrement croissant.

9. Système selon l'une quelconque des revendications 1 à 7, **caractérisé en ce qu'il** comprend une pluralité de sources d'événements, chacune desdites sources d'événements présentant un unique buffer.
